# DEMANDE DE BREVET EUROPEEN

(11) **EP 2 264 324 A1**
(43) Date de publication de la demande: **22.12.2010**
(21) Numéro de dépôt: 10165933.2
(22) Date de dépôt: 15.06.2010
(51) Int. Cl.: F16C 7/00

(54) **Procédé de fabrication d'une bielle pour la construction aéronautique**

(30) Priorité: 16.06.2009 FR 0954020
(71) Demandeur: SKF Aerospace France, 26240 Saint-Vallier-sur-Rhone (FR)
(72) Inventeur: Buchin, Jean-Michel, 39000, LONS LE SAUNIER (FR)
(74) Mandataire: Grand, Guillaume

(57) **Abrégé**

Selon ce procédé, on solidarise par soudage plastique une extrémité longitudinale (11) d'un tube (10) en matériau thermoplastique à une partie dédiée (21), en matériau thermoplastique, d'une pièce d'extrémité (20) adaptée pour être reliée de manière articulée à une pièce de structure. Selon l'invention, on fabrique le tube par extrusion de matériau thermoplastique, pour obtenir un profilé creux dont un tronçon constitue le tube et qui, au niveau de l'extrémité longitudinale du tube, présente au moins une surface plane (12, 13) parallèle à l'axe longitudinal (X-X') du tube, et pour réaliser le soudage plastique, on appose ladite au moins une surface plane de l'extrémité longitudinale du tube sur une surface plane correspondante (22, 23) appartenant à la partie dédiée de la pièce d'extrémité, puis on soude entre elles les surfaces planes apposées.

## Description

La présente invention concerne un procédé de fabrication d'une bielle pour la construction aéronautique, ainsi qu'une bielle correspondante.

Afin de transmettre des mouvements et/ou des efforts, il est connu, notamment dans le domaine aéronautique, d'utiliser des bielles dont le corps de bielle est constitué d'un tube comprenant un matériau composite avec une matrice en matériau thermodurcissable. Ce tube allie alors légèreté et résistance à la fois en traction et en compression. Les tolérances de montage de ces bielles nécessitent qu'elles soient réglables en longueur afin de faciliter la fixation à leurs extrémités. A cet effet, la bielle peut comporter un embout d'extrémité permettant la fixation, la liaison ou le raccordement de la bielle par rapport à une pièce de structure, la position longitudinale de cet embout pouvant être ajustée par rapport à l'extrémité longitudinale correspondante du tube. Pour ce faire, l'embout est à même d'être vissé dans un insert métallique solidarisé fixement à l'extrémité du tube. Par vissage/dévissage de l'embout par rapport à l'insert, la longueur effective de la bielle peut être ajustée.

On comprend que la liaison fixe entre l'insert métallique et le tube en matériau composite se doit d'être aussi résistante que possible. Actuellement, plusieurs types de liaison sont utilisés à cette fin. L'insert métallique est collé ou riveté autour du tube, le niveau de résistance de la liaison étant alors lié soit au cisaillement de la colle, soit au matage du tube par les rivets. Une autre possibilité consiste à co-injecter l'insert métallique avec le tube, le niveau de résistance de la liaison entre ces éléments étant alors lié au cisaillement de la matière formant la matrice du matériau composite constituant le tube. Dans tous les cas, le niveau des contraintes à rupture est souvent insuffisant pour garantir la pérennité mécanique de la bielle. En outre, le matériau métallique constituant l'insert présente généralement un coefficient de dilatation nettement supérieur à celui du matériau composite constituant le tube de sorte que, pour des variations de température courantes dans le domaine aéronautique, notamment entre -54°C et +200°C, la dilatation de l'insert provoque l'affaiblissement de la liaison avec le tube. C'est en particulier le cas pour des inserts constitués d'aluminium ou d'un alliage d'aluminium, très utilisés dans le domaine aéronautique. En outre, la solidarisation de l'insert d'une bielle de l'art antérieur nécessite un composant organique de type boulon ou rivet, ce qui augmente le coût et la masse de la bielle. Cette solidarisation nécessite en outre un alésage ou un taraudage susceptible de fragiliser l'extrémité longitudinale du tube et/ou la pièce d'extrémité de la bielle.

US-A-5 743 978, sur lequel le préambule de la revendication 1 est basé, propose de fabriquer une bielle en solidarisant par soudage plastique la tranche transversale d'extrémité d'un tube, obtenu par moulage d'un matériau plastique injecté, à la tranche transversale d'extrémité d'une pièce d'extrémité, elle aussi obtenue par moulage de plastique injecté. Pour réaliser des soudures plastiques de qualité, il est nécessaire de maîtriser avec précision entre les formes des éléments en plastique moulé, ce qui induit des contraintes techniques et économiques significatives.

La présente invention vise à proposer une bielle dont la fabrication est simple et économique, tout en présentant une structure allégée et robuste.

A cet effet, l'invention a pour objet un procédé de fabrication d'une bielle pour la construction aéronautique, tel que défini à la revendication 1.

L'invention a également pour objet une bielle pour la construction aéronautique, telle que définie à la revendication 9.

L'invention propose ainsi de fabriquer une bielle sans la nécessite de composants de fixation tels que des rivets ou des boulons, ce qui évite de dégrader la résistance mécanique du tube et/ou de la pièce d'extrémité. De plus, le tube et, avantageusement, la pièce d'extrémité sont réalisés à partir de profilés creux extrudés, dont on dispose facilement et à bas coût, tout en garantissant un soudage plastique efficace entre les composants de la bielle, grâce aux surfaces planes apposées que présentent ces profilés.

D'autres caractéristiques avantageuses mais facultatives de l'invention, prises isolément ou suivant toutes combinaisons techniquement admissibles, sont spécifiées aux revendications dépendantes 2 à 8 et 10.

La présente invention sera bien comprise et ses avantages ressortiront aussi à la lecture de la description qui va suivre, donnée uniquement à titre d'exemple non limitatif et faite en référence aux dessins annexés, dans lesquels :
- la figure 1 est une vue en perspective éclatée d'une bielle conforme à un premier mode de réalisation de l'invention dans l'état désassemblé, avant la mise en oeuvre d'un procédé conforme à l'invention ;
- la figure 2 est une vue de face, suivant la flèche II à la figure 1, de la bielle de la figure 1 dans l'état assemblé, après la mise en oeuvre d'un procédé conforme à l'invention ;
- la figure 3 est une coupe interrompue suivant la ligne III-III à la figure 2 ;
- la figure 4 est une vue analogue à la figure 1 d'une bielle conforme à un deuxième mode de réalisation de l'invention ;
- la figure 5 est une vue analogue à la figure 2 de la bielle de la figure 4 ;
- la figure 6 est une vue analogue à la figure 3 de la bielle de la figure 4 ;
- la figure 7 est une vue analogue à la figure 1 d'une bielle conforme à un troisième mode de réalisation de l'invention ;
- la figure 8 est une vue analogue à la figure 2 de la bielle de la figure 7 ;
- la figure 9 est une vue analogue à la figure 3 de la bielle de la figure 7 ;
- la figure 10 est une coupe d'une partie d'une bielle conforme à un quatrième mode de réalisation de l'invention ;
- la figure 11 est une coupe d'une partie d'une bielle conforme à un cinquième mode de réalisation de l'invention ;
- la figure 12 est une vue en perspective éclatée d'une partie d'une bielle conforme à un sixième mode de réalisation de l'invention, dans l'état désassemblé, avant la mise en oeuvre d'un procédé conforme à l'invention ;
- la figure 13 est une vue en coupe suivant le plan XIII à la figure 12 de la bielle de la figure 12 dans l'état assemblé, après la mise en oeuvre d'un procédé conforme à l'invention ;
- la figure 14 est une coupe d'une partie d'une bielle conforme à un septième mode de réalisation de l'invention ;
- la figure 15 est une vue analogue à la figure 14 d'une variante à la bielle de la figure 14 ; et
- la figure 16 est une vue analogue à la figure 14 d'une autre variante à la bielle de la figure 14.

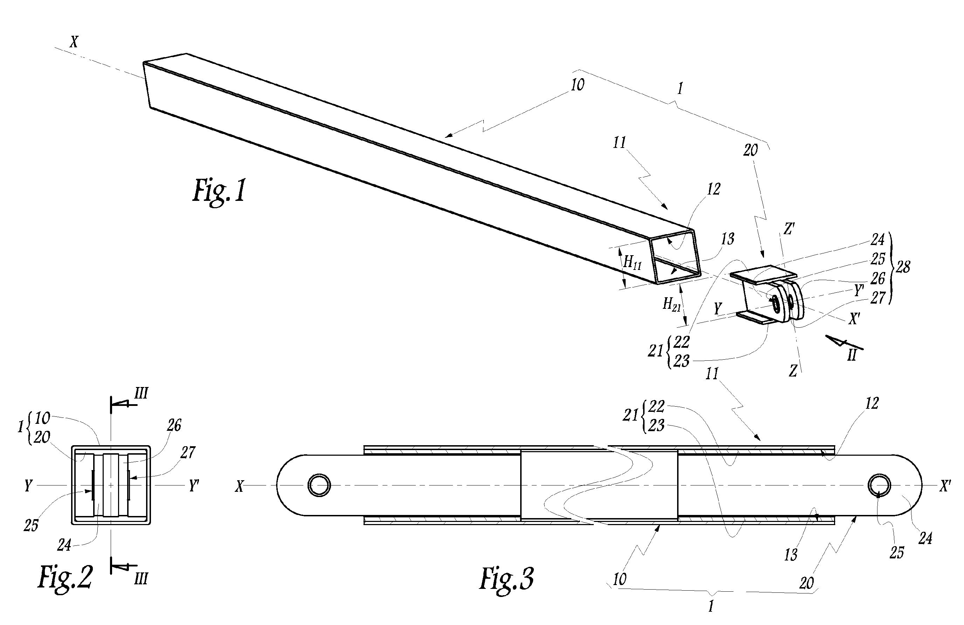

La figure 1 montre une bielle 1 s'étendant globalement autour d'un axe longitudinal X-X'. La bielle 1 est adaptée pour transmettre des mouvements et/ou des efforts entre, par exemple, deux pièces de structures non représentées. La bielle 1 comporte un corps de bielle sous forme d'un tube 10 et une pièce d'extrémité 20, qui sont adaptés pour être assemblés l'un à l'autre, suivant un procédé de fabrication conforme à l'invention tel que décrit ci-après.

Dans la présente demande, l'adjectif « longitudinal » se rapporte à une entité physique ou géométrique, telle qu'un composant, une surface ou une direction, dont la position ou l'orientation dépend directement de l'axe X-X'.

Le tube 10 a une forme globalement prismatique à base carrée. Le tube 10 est en effet formé par un tronçon de profilé dont une section transversale est carrée. Le tube 10 est creux sur tout ou partie de sa longueur, prise suivant l'axe X-X'. En particulier, le tube 10 présente une extrémité longitudinale 11 qui est creuse et ouverte. Le tube 10 forme une pièce allongée adaptée pour supporter des efforts transmis par la bielle 1.

Dans la présente demande, l'adjectif « transversal » désigne une entité physique ou géométrique, telle qu'un composant, une surface ou une direction, qui est orientée ou qui s'étend suivant un axe Y-Y' à la figure 1 perpendiculaire à l'axe longitudinal X-X'.

La pièce d'extrémité 20 comprend un organe d'articulation 28 et une partie dédiée 21 pour solidariser la pièce d'extrémité 20 au tube 10. En l'occurrence, l'organe d'articulation 28 est solidarisé à la partie dédiée 21.

La partie dédiée 21 comprend ici deux plaques 22 et 23 qui sont parallèles entre elles et dont la longueur suivant l'axe X-X' est sensiblement égale à la largeur suivant l'axe Y-Y'. Deux pattes 24 et 26 sont disposées entre les plaques 22 et 23. Les pattes 24 et 26 ont chacune la forme d'une plaque s'étendant suivant l'axe X-X'.

Les pattes 24 et 26 sont disposées perpendiculairement aux plaques 22 et 23, auxquelles elles sont solidarisées. Les chants des pattes 24 et 26 sont en appui sur les plaques 22 et 23. En l'occurrence, les pattes 24 et 26 sont monobloc avec les plaques 22 et 23, car la pièce d'extrémité 20 est réalisée à partir d'un profilé à section en double « H ». Alternativement, la solidarisation des pattes 24 et 26 sur les plaques 22 et 23 peut être réalisée par exemple par collage, par soudure plastique ou tout autre moyen équivalent.

Les pattes 24 et 26 remplissent la fonction d'organe d'articulation de la bielle 1. Dans ce but, du côté opposé au tube 10, les pattes 24 et 26 présentent chacune une portion en saillie par rapport aux plaques 22 et 23. Chaque portion en saillie des pattes 24 et 26 présente un trou 25 ou 27 respectif qui est circulaire et débouchant sur chaque face de la patte 24 ou 26 respective. Les trous 25 et 27 remplissent la fonction de paliers rotatifs pour un axe ou pour une articulation non représenté appartenant à une pièce de structure non représentée, c'est-à-dire qu'ils permettent le pivotement de cet axe ou de cette articulation.

Comme le montrent les figures 2 et 3, la pièce d'extrémité 20 est solidarisée au tube 10. Pour assembler et solidariser la pièce d'extrémité 20 et le tube 10, on emboîte la pièce d'extrémité 20 dans l'extrémité longitudinale 11. Plus précisément, on appose la partie dédiée 21 sur l'extrémité longitudinale 11 de façon à faire coopérer les surfaces planes externes des plaques 22 et 23 avec des surfaces planes 12 et 13 appartenant à l'extrémité longitudinale 11. En l'occurrence, les surfaces planes externes des plaques 22 et 23 ont des dimensions transversales complémentaires à celles des surfaces planes 12 et 13. La coopération des surfaces planes 12 et 13 avec les surfaces planes externes des plaques 22 et 23 est réalisée par contact mutuel sur des superficies étendues.

Pour permettre la coopération des surfaces planes 12 et 13 avec les surfaces planes externes des plaques 22 et 23, ces dernières sont séparées par une hauteur H₂₁ égale, au jeu de montage près, à une hauteur H₁₁ séparant les surfaces planes 12 et 13. Les hauteurs H₂₁ et H₁₁ sont mesurées suivant un axe Z-Z' qui est perpendiculaire aux axes X-X' et Y-Y'.

La pièce d'extrémité 20 est ainsi agencée à l'extrémité longitudinale 11 du tube 10. L'emboîtement ou l'apposition de la partie dédiée 21 dans et sur l'extrémité longitudinale 11 est effectué de sorte qu'une portion saillante de l'organe d'articulation 28, comprenant en particulier les trous 25 et 27, est située hors du tube 10, comme le montre la figure 3. Ainsi, la pièce d'extrémité 20 est logée partiellement dans l'extrémité longitudinale 11.

Un procédé conforme à l'invention comprend ensuite une étape dans laquelle l'extrémité longitudinale 11 est soudée à la partie dédiée 21, de façon à solidariser la pièce d'extrémité 20 au tube 10. Dans une bielle conforme à l'invention, le tube et la partie dédiée comprennent chacun un matériau thermoplastique. D'une part, le tube 10 est entièrement constitué de matériau thermoplastique, car c'est un tronçon de profilé obtenu par extrusion d'un matériau composite à matrice à matière thermoplastique et chargé de fibres. En l'occurrence, la matière thermoplastique est composée de polyétheréthercétone (PEEK). La matrice en matière thermoplastique pourrait aussi être sélectionnée dans le groupe constitué du polyétheréthercétone (PEEK), du polyéthercétonecétone (PEKK), du polysulfure de phénylène (PPS), du polyétherimide (PEI). Les fibres peuvent être composées de fibres de carbone, de verre et/ou d'aramide.

D'autre part, le matériau composite formant la pièce d'extrémité 20 est réalisé par exemple avec la même matière thermoplastique et avec des fibres identiques ou distinctes. L'ensemble de la pièce d'extrémité 20 est ici réalisé dans un tel matériau composite à matrice en matière thermoplastique, à savoir les plaques 22 et 23 et les pattes 24 et 26. Les bagues éventuellement insérées dans les trous 25 et 27 peuvent toutefois être réalisées en matériau métallique.

Dans un procédé conforme à l'invention, le soudage de l'extrémité longitudinale 11 et de la partie dédiée 21 est réalisé par soudage plastique, en mettant en oeuvre une technique connue, telle que le soudage par ultrasons, le soudage à hautes fréquences, le soudage par éléments chauffants (lame ou miroir), le soudage par rotation, le soudage par outil pivot, le soudage par outil à inertie ou encore le soudage par laser.

Après avoir soudé l'extrémité longitudinale 11 et la partie dédiée 21, la pièce d'extrémité 20 est solidarisée au tube 10 au moyen de deux soudures plastiques. En l'occurrence, les soudures plastiques sont réalisées respectivement entre chaque surface plane 12 ou 13, d'une part, et chaque surface plane externe des plaques 22 et 23, d'autre part.

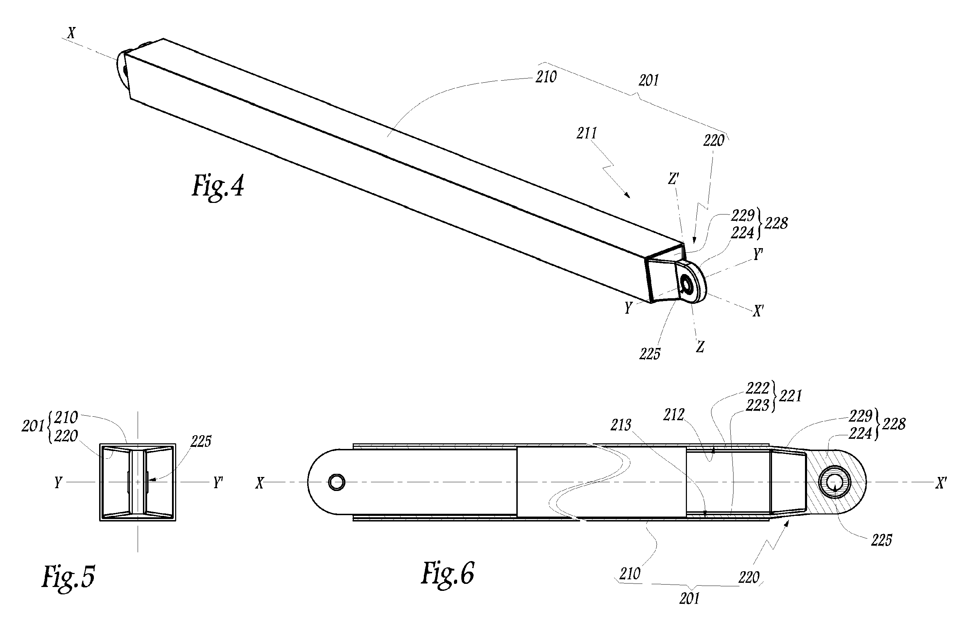

Les figures 4, 5 et 6 illustrent une bielle 201 conforme à un deuxième mode de réalisation de l'invention. La description de la bielle 1 donnée ci-dessus en relation avec les figures 1, 2 et 3 peut être transposée à la bielle 201, à l'exception des différences mentionnées ci-après. Sur les figures 4, 5 et 6, une entité, physique ou géométrique, qui est identique ou correspondante à une entité de la bielle 1 porte la même référence numérique augmentée de 200.

On définit ainsi un tube 210, une extrémité longitudinale 211, des surfaces planes 212 et 213, une pièce d'extrémité 220, une partie dédiée 221, des plaques 222 et 223 et un organe d'articulation 228.

La bielle 201 diffère de la bielle 1, car la pièce d'extrémité 20 présente une section transversale rectangulaire dont le périmètre décroît en s'éloignant de l'extrémité longitudinale 211. En d'autres termes, l'organe de fixation 228 a une embase 229 globalement en forme de prisme triangulaire. De plus, l'organe d'articulation 228 n'a qu'une seule patte 224 prolongeant l'embase 229 et faisant saillie hors du tube 210. L'organe d'articulation 228 présente un seul trou 225, ménagé dans la patte 224, pour recevoir un axe ou une articulation d'une pièce de structure non représentée.

En outre, la partie dédiée 221 a une section carrée dont les dimensions correspondent, au jeu de montage près, à celles de la section transversale carrée de l'extrémité longitudinale 211. La partie dédiée 221 présente donc deux plaques latérales non représentées qui s'étendent suivant les axes X-X' et Z-Z' de façon à joindre les plaques 222 et 223. En fonction des efforts à transmettre par la bielle 201, la pièce d'extrémité 220 est solidarisée au tube 210 au moyen d'une, deux, trois ou quatre soudures plastiques planes réalisées autour de la partie dédiée 221, par exemple entre les surfaces planes 212 et 213 et une surface plane correspondante des plaques 222 et 223.

L'organe d'articulation 228 présente l'avantage d'être léger et peu encombrant. De plus, les moments d'inertie de la pièce d'extrémité 220 sont similaires aux moments d'inertie de l'extrémité longitudinale 211 1 et ils varient progressivement de l'embase 229 jusqu'à l'organe de fixation 228, ce qui offre une tenue mécanique élevée à la bielle 201, sans discontinuité dans la transmission d'efforts.

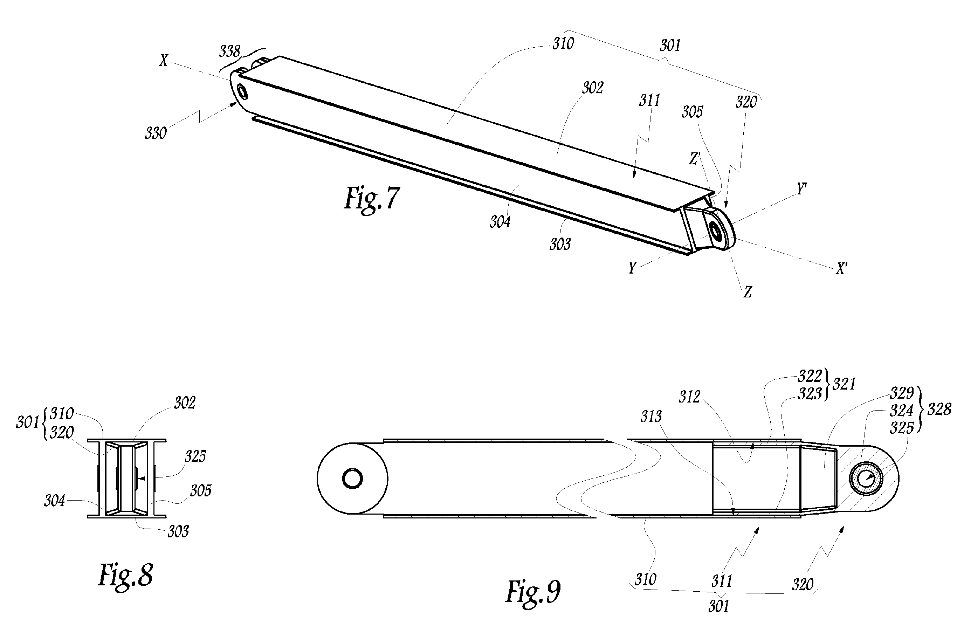

Les figures 7,8 et 9 illustrent une bielle 301 présentant des similitudes avec la bielle 1. La description de la bielle 1 donnée ci-dessus peut être transposée à la bielle 301, à l'exception des différences mentionnées ci-après. Sur les figures 7, 8 et 9, une entité, physique ou géométrique, qui est identique ou correspondante à une entité de la bielle 1 porte la même référence numérique augmentée de 300.

On définit ainsi un tube 310, une extrémité longitudinale 311, des surfaces planes 312 et 313, une pièce d'extrémité 320, une partie dédiée 321, des plaques 322 et 323, une patte 324, un trou 325 et un organe d'articulation 328.

La bielle 301 diffère de la bielle 201, car le tube 310 est formé par un tronçon de profilé qui a une section transversale en forme de double « H » ou d'échelle à deux barreaux. En d'autres termes, le tube 310 est composé de deux semelles 302 et 303 parallèles entre eux et entre lesquels s'étendent deux âmes 304 et 305 planes et parallèles entre elles.

Par ailleurs, l'extrémité longitudinale 330 qui est opposée à l'extrémité longitudinale 320 présente un organe d'articulation 338 qui est similaire à l'organe d'articulation 28 et qui est usiné directement dans les âmes 304 et 305 du tube 310.

La bielle 301 est relativement légère avec des moments d'inertie relativement élevés. De plus, on peut suspendre ou rapporter divers objets sur le tube 310 en raison de la forme de sa section.

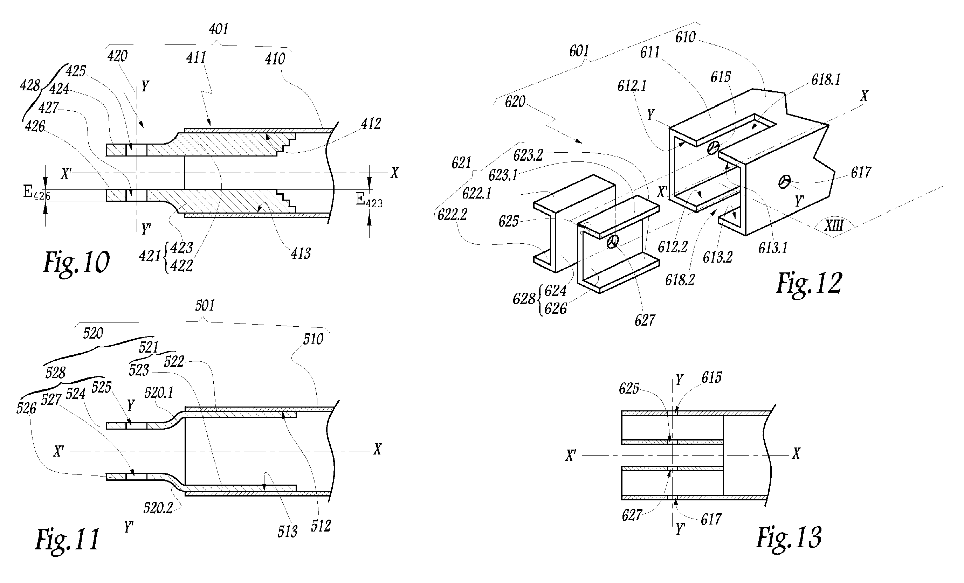

La figure 10 montre une bielle 401 qui constitue une variante à la bielle 1. La description de la bielle 1 donnée ci-dessus en relation avec les figures 1 à 3 peut être transposée à la bielle 401, à l'exception des différences mentionnées ci-après. Sur la figure 10, une entité, physique ou géométrique, qui est identique ou correspondante à une entité de la bielle 1 porte la même référence numérique augmentée de 400.

On définit ainsi un tube 410, une extrémité longitudinale 411, des surfaces planes 412 et 413, une pièce d'extrémité 420, une partie dédiée 421, des plaques 422 et 423, des trous 425 et 427 et un organe d'articulation 428.

La bielle 401 diffère de la bielle 1, car les plaques 422 et 423 sont constituées d'une superposition de plaques élémentaires minces assemblées par exemple au moyen de soudures plastiques sur leurs faces. Ainsi, l'épaisseur E₄₂₃ de la plaque 423, mesurée suivant l'axe Y-Y' transversalement à l'axe X-X', est supérieure à l'épaisseur E₄₂₆ de la patte 426. De même, l'épaisseur de la plaque 422 est supérieure à l'épaisseur de la patte 424. Globalement, l'épaisseur de la partie dédiée 421 est supérieure l'épaisseur de l'organe d'articulation 428.

La bielle 401 présente une résistance mécanique élevée et des moments d'inertie localement adaptés à la distribution des contraintes. La bielle 401 est en outre allégée, notamment par rapport à la bielle 1, car sa partie dédiée ne nécessite pas de plaques de type 22 et 23.

La figure 11 illustre une bielle 501 conforme à un cinquième mode de réalisation de l'invention. La description de la bielle 401 donnée ci-dessus peut être transposée à la bielle 501, à l'exception des différences mentionnées ci-après. Sur la figure 11, une entité, physique ou géométrique, qui est identique ou correspondante à une entité de la bielle 401 porte la même référence numérique augmentée de 100.

On définit ainsi un tube 510, une extrémité longitudinale 511, des surfaces planes 512 et 513, une pièce d'extrémité 520, une partie dédiée 521, des plaques 522 et 523, des trous 525 et 527 et un organe d'articulation 528.

La bielle 501 diffère de la bielle 1 ou 401, car la pièce d'extrémité 520 présente deux coudes 520.1 et 520.2 qui raccordent respectivement la plaque 522 à la patte 524 et la plaque 523 à la patte 526. Les coudes 520.1 et 520.2 convergent ici dans le sens X-X', c'est-à-dire depuis le tube 510 vers la pièce d'extrémité 520. Ainsi, l'épaisseur totale de la partie dédiée 521 est supérieure à l'épaisseur totale de l'organe d'articulation 528, l'épaisseur étant mesurée suivant l'axe Y-Y' qui est transversal à l'axe X-X'. Alternativement, les coudes peuvent diverger depuis le tube vers la pièce d'extrémité.

La bielle 501 est légère, peu encombrante et elle présente une résistance mécanique adaptée aux tubes de faibles sections.

Les figures 12 et 13 illustrent une bielle 601 conforme à un sixième mode de réalisation de l'invention. La description de la bielle 1 donnée ci-dessus peut être transposée à la bielle 601, à l'exception des différences mentionnées ci-après. Sur les figures 12 et 13, une entité, physique ou géométrique, qui est identique ou correspondante à une entité de la bielle 1 porte la même référence numérique augmentée de 600.

On définit ainsi un tube 610, une extrémité longitudinale 611, des surfaces planes 612 et 613, une pièce d'extrémité 620, une partie dédiée 621, des plaques 622 et 623, des trous 625 et 627 et un organe d'articulation 628.

La bielle 601 diffère de la bielle 1, car la pièce d'extrémité 620 est formée par deux tronçons de poutres à sections transversales monobloc en « C » ou en « U ». Le premier tronçon comprend une plaque supérieure 622.1 et une plaque inférieure 622.2, qui sont parallèles entre elles et qui sont jointes par une âme 624. Le deuxième tronçon comprend une plaque supérieure 623.1 et une plaque inférieure 623.2, qui sont parallèles entre elles et qui sont jointes par une âme 626.

Les premier et deuxième tronçons sont disposés « dos à dos », c'est-à-dire avec leurs âmes 624 et 626 parallèles et relativement proches et avec leurs plaques respectives 622.1, 622.2, 623.1 et 623.2 parallèles deux à deux et relativement éloignées.

Les surfaces externes des plaques supérieures 622.1 et 623.1 sont coplanaires. De même, les surfaces externes des plaques inférieures 622.2 et 623.2 sont coplanaires. La partie dédiée 621 est formée par les plaques 622.1, 622.2, 623.1 et 623.2. L'extrémité longitudinale 611 du tube 610 présente une section transversale rectangulaire dont les dimensions sont complémentaires aux dimensions de la pièce d'extrémité 620.

Les âmes 624 et 626 présentent, dans leurs régions centrales, des trous 625 et 627 respectifs, de façon à former l'organe d'articulation 628. La bielle 601 diffère en outre de la bielle 1, car l'extrémité longitudinale 611 comporte deux trous 615 et 617 percés coaxialement dans les flancs de l'extrémité longitudinale 611. Comme le montre la figure 13, après l'apposition de la pièce d'extrémité 620 sur l'extrémité longitudinale 611, les trous 615, 625, 627 et 617 sont alignés, de façon à recevoir un axe cylindrique ou une articulation d'une pièce de structure non représentée.

En outre, l'extrémité longitudinale 611 présente des surfaces planes 612.1, 613.1, 612.2 et 613.2 qui sont respectivement complémentaires aux plaques 622.1, 623.1, 622.2 et 623.2. Pour faciliter l'engagement et l'emboîtement de la pièce d'extrémité 620 dans l'extrémité longitudinale 611, l'extrémité longitudinale 611 présente deux encoches 618.1 et 618.2 qui s'étendent suivant l'axe X-X' et qui débouchent à l'extrémité libre de l'extrémité longitudinale 611.

Après l'emboîtement de la pièce d'extrémité 620 dans l'extrémité longitudinale 611, les plaques 622.1, 623.1, 622.2 et 623.2 coopèrent respectivement avec les surfaces planes 612.1, 613.1, 612.2 et 613.2. La bielle 601 comporte quatre soudures plastiques qui sont formées entre les plaques et surfaces planes respectives suivantes :
- 612.1 et 622.1 ;
- 613.1 et 623.1 ;
- 612.2 et 622.2 ; et
- 613.2 et 623.2.

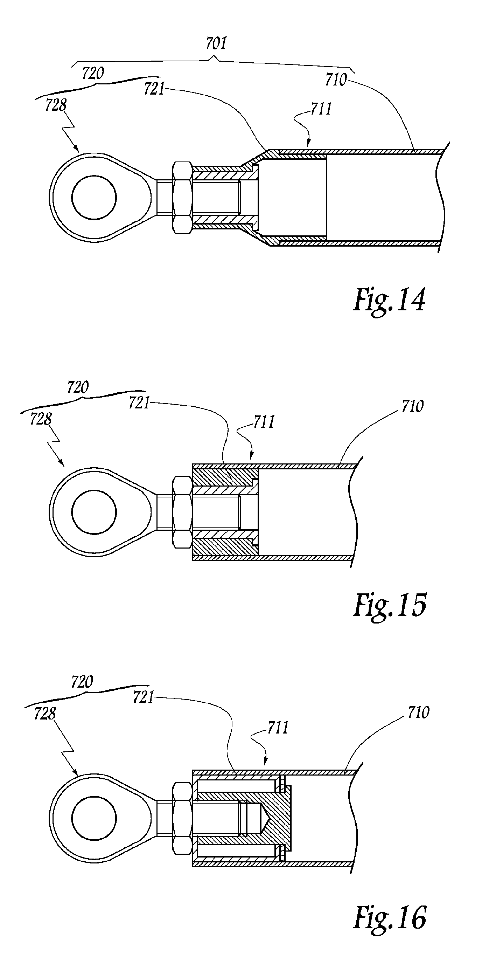

Les figures 14, 15 et 16 montrent des variantes d'une bielle 701 conforme à l'invention et analogue aux bielles décrites ci-avant en relation avec les figures 1 à 13.

La principale différence entre les bielles 1, 201, 301, 401, 501, 601 et les bielles illustrées aux figures 14, 15 et 16 réside dans le fait que l'organe d'articulation n'est plus réalisé en un matériau composite à matrice en matière thermoplastique, car il est ici constitué d'un embout 728 en un matériau métallique. Un tel embout est par exemple décrit dans la demande FR-A-2 895 041.

L'embout 728 est rapporté sur une partie dédiée 721 d'une pièce d'extrémité 720. Pour cela, l'embout 728 et la terminaison de la partie dédiée 721 peuvent être collés, vissés ou assemblés par un moyen équivalent.

Comme pour les bielles illustrées aux figures 1 à 13, la pièce d'extrémité 720 est solidarisée à un tube 710 au moyen de soudures plastiques réalisées entre la partie dédiée 721 et une extrémité longitudinale 711 du tube 720.

Dans la variante de la figure 14, la partie dédiée 721 présente un rétrécissement de sa section transversale analogue à celui de la bielle 501.

Dans la variante de la figure 15, la partie dédiée 721 a la forme d'un manchon dont la section transversale correspond à la section transversale de l'extrémité longitudinale 711.

Dans la variante de la figure 16, la partie dédiée 721 a la forme d'un caisson ou d'un boîtier creux dont la section transversale correspond à la section transversale de l'extrémité longitudinale 711.

Selon d'autres variantes non représentées, le profilé formant le tube de la bielle peut présenter une section transversale en forme de « U », de « J », de «I»,oude«H».

Selon l'application visée et les efforts à supporter par une bielle conforme à l'invention, on choisit des matériaux pour les matrices de l'extrémité longitudinale du tube et de la pièce d'extrémité qui sont identiques ou différents. Les soudures plastiques sont alors de type homogène, par exemple PEEK sur PEEK comme dans le cas de la bielle 1, ou de type hétérogène, par exemple PEEK sur PEKK.

Par ailleurs, les soudures plastiques décrites ci-dessus pour les bielles des figures 1 à 16 sont des soudures planes présentant donc une superficie relativement étendue. Cependant, en fonction des efforts à supporter par une bielle conforme à l'invention, l'extrémité longitudinale du tube et la pièce d'extrémité peuvent être soudés l'un à l'autre au moyen d'un ou de plusieurs point(s) de soudure plastique et/ou d'une ou de plusieurs ligne(s) ou cordon(s) de soudure plastique.

Une bielle conforme à l'invention présente une construction allégée et simplifiée, car elle ne nécessite pas de composant de fixation tel qu'un rivet ou un boulon. De plus, une bielle conforme à l'invention offre une bonne résistance mécanique, car ses moments d'inertie sont relativement élevés et car elle ne présente pas de perçage qui sert à recevoir un tel composant de fixation et qui serait susceptible de dégrader la résistance mécanique du tube et/ou de la pièce d'extrémité.

Par ailleurs, une bielle conforme à l'invention ne présente pas de risque de corrosion, car elle met en oeuvre des matériaux thermoplastiques. En outre, une bielle conforme à l'invention ne pose pas de problème de différentiel de dilatation thermique, car les matériaux mis en oeuvre pour solidariser le tube et la pièce d'extrémité sont identiques.

Un procédé conforme à l'invention simplifie la réalisation d'une telle bielle, en supprimant certaines étapes d'assemblage.

## Revendications

1. Procédé de fabrication d'une bielle (1 ; 201 ; 301 ; 401 ; 501 ; 601 ; 701) pour la construction aéronautique, procédé dans lequel on solidarise par soudage plastique une extrémité longitudinale (11 ; 211 ; 311 ; 411 ; 511 ; 611 ; 711) d'un tube (10 ; 210 ; 310 ; 410 ; 510 ; 610 ; 710) en matériau thermoplastique à une partie dédiée (21 ; 221 ; 321 ; 421 ; 521 ; 621 ; 721), en matériau thermoplastique, d'une pièce d'extrémité (20 ; 220 ; 320 ; 420 ; 520 ; 620 ; 720) adaptée pour être reliée de manière articulée à une pièce de structure,
**caractérisé en ce qu'**on fabrique le tube (10 ; 210 ; 310 ; 410 ; 510 ; 610 ; 710) par extrusion de matériau thermoplastique, pour obtenir un profilé creux dont un tronçon constitue le tube et qui, au niveau de l'extrémité longitudinale (11 ; 211 ; 311 ; 411 ; 511 ; 611 ; 711) du tube, présente au moins une surface plane (12, 13 ; 212, 213 ; 312, 313 ; 412, 413 ; 512, 513 ; 612.1, 612.2, 613.1, 613.2) parallèle à l'axe longitudinal (X-X') du tube,
et **en ce que**, pour réaliser le soudage plastique, on appose ladite au moins une surface plane de l'extrémité longitudinale du tube sur une surface plane correspondante (22, 23 ; 222, 223 ; 322, 323 ; 422, 423 ; 522, 523 ; 622.1, 622.2, 623.1, 623.2) appartenant à la partie dédiée (21 ; 221 ; 321 ; 421 ; 521 ; 621 ; 721) de la pièce d'extrémité (20 ; 220 ; 320 ; 420 ; 520 ; 620 ; 720), puis on soude entre elles les surfaces planes apposées.

2. Procédé suivant la revendication 1, **caractérisé en ce que** la forme de la section transversale du profilé dont un tronçon constitue le tube (10 ; 210 ; 310 ; 410 ; 510 ; 610 ; 710) est sélectionnée dans un groupe constitué d'un rectangle, d'un carré, d'un « U », d'un « J », d'un « I », d'un « H » et d'un double « H ».

3. Procédé suivant l'une des revendications 1 ou 2, **caractérisé en ce qu'**on fabrique la pièce d'extrémité (20 ; 420 ; 520 ; 620 ; 720) à partir d'un ou de plusieurs profilés en matériau thermoplastique.

4. Procédé suivant la revendication 3, **caractérisé en ce que** la forme de la section transversale du ou des profilés à partir desquels on fabrique la pièce d'extrémité (20 ; 420 ; 520 ; 620 ; 720) est sélectionnée dans un groupe constitué d'un rectangle, d'un carré, d'un « H », d'un double « H », d'un « C », d'un « J », d'un « I » et d'un « U ».

5. Procédé suivant l'une quelconque des revendications précédentes, **caractérisé en ce que** la section transversale de la pièce d'extrémité (220 ; 320 ; 420 ; 520) présente un périmètre qui décroît en s'éloignant de l'extrémité longitudinale (211 ; 311 ; 411 ; 511) du tube (210 ; 310 ; 410 ; 510).

6. Procédé suivant l'une quelconque des revendications précédentes, **caractérisé en ce que**, pour réaliser le soudage plastique, on loge partiellement la pièce d'extrémité (20 ; 220 ; 320 ; 420 ; 520 ; 620 ; 720) dans l'extrémité longitudinale (11 ; 211; 311 ; 411; 511 ; 711) du tube (10 ; 210 ; 310 ; 410 ; 510 ; 710).

7. Procédé suivant l'une quelconque des revendications précédentes, **caractérisé en ce que** le tube (10 ; 210 ; 310 ; 410 ; 510 ; 610 ; 710) et/ou la partie dédiée (21 ; 221 ; 321 ; 421 ; 521 ; 621 ; 721) de la pièce d'extrémité (20 ; 220 ; 320 ; 420 ; 520 ; 620 ; 720) sont réalisés en un matériau composite à matrice en matière thermoplastique et chargé de fibres.

8. Procédé suivant la revendication 7, **caractérisé en ce que** ladite matière thermoplastique est sélectionnée dans le groupe constitué du polyétheréthercétone (PEEK), du polyéthercétonecétone (PEKK), du polysulfure de phénylène (PPS), du polyétherimide (PEI).

9. Bielle (1 ; 201 ; 310 ; 401 ; 501 ; 601 ; 701) pour la construction aéronautique, comportant :
- un tube (10 ; 210 ; 310 ; 410 ; 510 ; 610 ; 710) constitué d'un tronçon d'un profilé creux qui est obtenu par extrusion de matériau thermoplastique et qui présente, au niveau d'une extrémité longitudinale (11 ; 211 ; 311 ; 411 ; 511 ; 611 ; 711), au moins une surface plane (12,13 ; 212, 213 ; 312, 313 ; 412, 413 ; 512, 513 ; 612.1, 612.2, 613.1, 613.2) parallèle à l'axe longitudinal (X-X') du tube, et
- une pièce d'extrémité (20 ; 220 ; 320 ; 420 ; 520 ; 620 ; 720) qui inclut une partie dédiée (21 ; 221 ; 321 ; 421 ; 521 ; 621 ; 721), en matériau thermoplastique, à laquelle est solidarisé un organe d'articulation (28 ; 228 ; 328 ; 428 ; 528 ; 628 ; 728) adapté pour relier la bielle à une pièce de structure et qui est solidarisé au tube par au moins une soudure plastique entre ladite au moins une surface plane de l'extrémité longitudinale du tube et une surface plane apposée (22, 23 ; 222, 223 ; 322, 323 ; 422, 423 ; 522, 523 ; 622.1, 622.2, 623.1, 623.2) appartenant à cette partie dédiée.

10. Bielle suivant la revendication 9, **caractérisée en ce que** l'organe d'articulation (28 ; 228 ; 328 ; 428 ; 528 ; 628) est réalisé en un matériau composite à matrice à matière thermoplastique ou constitué d'un embout (728) en matériau métallique.
